(19) **Europäisches Patentamt**
**European Patent Office**
**Office européen des brevets**

(11) Publication number: **0 286 674 B1**

# (12) EUROPEAN PATENT SPECIFICATION

(45) Date of publication of patent specification: **20.07.94**

(51) Int. Cl.⁵: **B32B 9/00**, D04H 1/00

(21) Application number: **87908030.7**

(22) Date of filing: **13.10.87**

(86) International application number:
**PCT/US87/02616**

(87) International publication number:
**WO 88/02695 (21.04.88 88/09)**

(54) **SOUND AND THERMAL INSULATION.**

(30) Priority: **14.10.86 US 918738**

(43) Date of publication of application:
**19.10.88 Bulletin 88/42**

(45) Publication of the grant of the patent:
**20.07.94 Bulletin 94/29**

(84) Designated Contracting States:
**AT BE CH DE FR GB IT LI LU NL SE**

(56) References cited:
| | |
|---|---|
| EP-A- 0 199 567 | WO-A-86/06110 |
| GB-A- 1 218 753 | GB-A- 1 236 021 |
| US-A- 3 562 079 | US-A- 3 681 188 |
| US-A- 4 032 607 | US-A- 4 304 746 |
| US-A- 4 395 455 | US-A- 4 412 675 |
| US-A- 4 444 574 | US-A- 4 618 531 |
| US-A- 4 643 931 | |

(73) Proprietor: **THE DOW CHEMICAL COMPANY**
**2030 Dow Center**
**Abbott Road**
**P.O. Box 1967**
**Midland Michigan 48640-1967(US)**

(72) Inventor: **McCULLOUGH, Francis, P., Jr.**
**104 Fir Drive**
**Lake Jackson, TX 77566(US)**
Inventor: **SNELGROVE, R., Vernon**
**1921 North H Street**
**Freeport, TX 77541(US)**
Inventor: **HOTCHKISS, Robert, L.**
**5211 Dale Street**
**Midland, MI 48640(US)**
Inventor: **HALL, David, M.**
**1327 Loftin Drive**
**Auburn, AL 36830(US)**
Inventor: **McCULLOUGH, Jacqueline, R.**
**104 Fir Drive**
**Lake Jackson, TX 77566(US)**

(74) Representative: **Smulders, Theodorus A.H.J.,**
**Ir. et al**
**Vereenigde Octrooibureaux**
**Nieuwe Parklaan 97**
**NL-2587 BN 's-Gravenhage (NL)**

**Description**

The present invention relates to a nonflammable insulation material which possesses excellent sound attenuating and dampening properties. More particularly, the invention is concerned with resilient, shape reforming, lightweight, nonflammable structures of carbonaceous materials having low heat conductivity, and excellent sound absorbing properties. The structures are further characterized by having good shape and volume retention that are stable to numerous compression and unloading cycles.

EP-A-0,199,567 relates to carbonaceous fibers with spring-like reversible deflection and to a method for manufacturing said fibers. More in particular, said fibers have a spring-like structural configuration and a reversible deflection of greater than 1.2:1. The fibers are prepared from a carbonaceous precursor material which is stabilized and then heat treated to a temperature sufficient to impart a spring-like structural configuration to the fiber. Such fibers may optionally be knitted on woven into a cloth which can then be deknitted and carded, garnetted or otherwise defibrilated to produce a resilient web-like fluff or wool-like material having the spring-like configuration.

Yet, it is surprisingly found that a batting of the fibers disclosed in EP-A-0,199,567 may advantageously be used in a sound absorbing structure.

In accordance with the present invention there is provided the use as a sound-absorbing material of a lightweight, nonflammable structure composed of a multiplicity of nonlinear carbonaceous fibers which possess excellent sound absorbing properties. More particularly, the present invention is concerned with a structure comprising a multiplicity of resilient carbonaceous or carbon fibers having a reversible deflection ratio of greater than 1.2:1, an aspect ratio (l/d) of greater than 10:1 and a limited oxygen index value of greater than 40. The structure may have a bulk density of from 2.4 to 32 kg/m$^3$, preferably from 2.4 to 8 kg/m$^3$, for lightweight structures that are used for clothing articles, for example, and from greater than 8 kg/m$^3$ to 32 kg/m$^3$ for higher weight structures that are used for furnace insulation, for example, and the fibres may have a sinusoidal or coil-like shape.

The present invention is specifically concerned with structures comprising a multiplicity of nonflammable, nonlinear, carbonaceous or carbon filaments which may contain at least 65 percent carbon. The filaments are particularly identified by their degree of carbonization and/or their degree of electrical conductivity in the determination of the particular use for which they are most suited.

In accordance with one preferred embodiment of the invention, the nonlinear, carbonaceous filaments which are utilized in the invention are non-electrically conductive filaments which are formed by the partial carbonization of stabilized acrylic fibers or fabric or some other stabilized carbon fiber precursor material under conditions to impart a sinusoidal and/or a coil-like configuration to the fibers. The filaments are further characterized by their wool-like, fluffy appearance and texture when formed into nonwoven mats or batting. As will become apparent, the greater the amount of the filaments present in the structure, the greater will be the wool-like texture and resiliency. The fibers may be blended with noncarbonaceous fibers or carbonaceous linear fibers.

The term nonconductive as utilized in the present application relates to a resistance of greater than 4 x 10$^6$ ohms/cm on a 6K tow formed from fibers having a diameter of from 7 to 20 $\mu$m, preferably 7 to 12 $\mu$m. When the precursor fiber is an acrylic fiber, it has been found that a nitrogen content of greater than 18.8 percent results in a nonconductive fiber.

In accordance with a second preferred embodiment of the invention, the nonlinear, carbonaceous filaments which are utilized in the invention comprise carbonaceous filaments having a low degree of electrical conductivity and a carbon content of less than 85 percent. Preferably, the carbonaceous fibers are derived from oxidized acrylic fibers and possess a percent nitrogen content of from 10 to 35 percent, most preferably from 20 to 25 percent. The larger the amount of carbon content of the fibers utilized, the higher the degree of electrical conductivity. These high carbon filaments still retain a wool-like appearance when formed into a mat or a batting, especially when the majority of the fibers are coil-like. Also, the greater the percentage of coil-like fibers in the structure, the greater the resiliency of the structure. As a result of the greater carbon content, the structures prepared with the filaments of the invention have greater sound absorbing properties and result in a more effective thermal barrier at higher temperatures. Low conductivity means that a 6K tow of fibers has a resistance of from 4 x 10$^6$ to 4 x 10$^3$ ohms/cm.

In accordance with a third preferred embodiment of the invention, the nonlinear, carbonaceous or carbon filaments which are utilized in the invention have a carbon content of at least 85 percent. Preferably, the filaments which are utilized are derived from stabilized acrylic fibers and have a nitrogen content of less than 10 percent. As a result of the higher carbon content, the structures are more electrically conductive. That is, the resistance of a 6K tow of fibers is less than 4 x 10$^3$ ohms/cm. These fibers can be utilized in place of conventional straight or linear carbon fibers. Moreover, the coil-like carbonaceous or carbon

2

filaments when formed into a structure such as a mat or batting, surprisingly provide better insulation against high heat and sound than an equal weight of linear carbon fibers. A structure containing the greater amount of the coil-like fibers as compared to sinusoidal or linear fibers, provides a more effective barrier against heat and sound.

The batting is formed from nonlinear, nonflammable, resilient, elongatable carbonaceous fibers having a reversible deflection ratio of greater than 1.2:1, an aspect ratio (l/d) of greater than 10:1 and a limited oxygen index value of greater than 40. The carbonaceous fibers may possess a sinusoidal or a coil-like configuration or a more complicated, i.e. convoluted, structural combination of the two.

The fibers used in the invention when subjected according to the test method of ASTM D 2863-77 have a LOI value greater than 40. The test method is also known as "oxygen index" or "limited oxygen index" (LOI). With this procedure the concentration of oxygen in $O_2/N_2$ mixtures is determined at which a vertically mounted specimen is ignited at its upper end and just (barely) continues to burn. The width of the specimen is from 0.65 to 0.3 cm with a length of from 7 to 15 cm. The LOI value is calculated according to the equation:

$$LOI = \frac{[O_2]}{[O_2] + [N_2]} \times 100$$

The LOI value of a number of fibers is as follows:

| | |
|---|---|
| polypropylene | 17.4 |
| polyethylene | 17.4 |
| polystyrene | 18.1 |
| rayon | 18.6 |
| cotton | 20.1 |
| nylon | 20.1 |
| polycarbonate | 22 |
| rigid polyvinyl chloride | 40 |
| oxidized polyacrylonitrile | > 40 |
| graphite | 55 |

Such carbonaceous fibers are prepared by heat treating a suitable stabilized precursor material such as that derived from an assembly of stabilized polyacrylonitrile based fibers, pitch based (petroleum or coal tar) fibers or fibers made from other polymeric materials which can be made into nonlinear fiber or filament structures or configurations and which are thermally stable.

For example, in the case of polyacrylonitrile (PAN) based fibers, the fibers are formed by melt or wet spinning a suitable fluid composition of the precursor material having a normal nominal diameter of from 4 to 25 micrometers. The fibers are collected as an assembly of a multiplicity of continuous filaments in tows and are stabilized (by oxidation in the case of PAN based fibers) in the conventional manner.

In US-A-4,304,746 low- or non-conducting PAN fibers are described, whereas coiled, carbonised PAN fibers are disclosed in US-A-4,643,931.

The oxidation stabilized fiber tows (or staple yarn made from chopped or stretch broken fiber staple) are thereafter formed into a coil-like and/or sinusoidal form by knitting the tow or yarn into a fabric or cloth (recognizing that other fabric forming and coil forming methods can be employed). The so-formed knitted fabric or cloth is thereafter heat treated, in a relaxed and unstressed condition, at a temperature of from 525 to 750°C, in an inert atmosphere for a period of time sufficient to produce a heat induced thermoset reaction wherein additional cross-linking and/or a cross-chain cyclization reaction occurs between the original polymer chain. At the lower temperature range of from 150 to 525°C, the fibers are provided with a varying proportion of a temporary to a permanent "set", while in the upper range of temperatures of from 525°C and above, the fibers are provided with a permanent "set". What is meant by "permanent set" is that a fiber possesses a degree of resiliency which manifests itself in a "reversible deflection" of the fiber when it is placed under stress such that the fiber is substantially linear in shape and where, upon release of the stress, the fiber returns to its unstressed condition. It is, of course, to be understood that the fibers or fiber assembly may be initially heat treated at the higher range of temperatures so long as the heat treatment is conducted while the coil-like and/or sinusoidal configuration is in a relaxed or unstressed state and under an inert, nonoxidising atmosphere. As a result of the higher temperature treatment, a permanently set, coil-like or sinusoidal configuration or structure is imparted to the fibers in a yarn, tow or thread. The resulting fiber, tow or yarn having the nonlinear structural configuration (which are derived by deknitting the cloth) are subjected to other methods of treatment known in the art to create an opening, a procedure in which the fibers, yarn or tow of the cloth are separated into a nonlinear, entangled, wool-like fluffy material in which the individual fibers retain their coil-like or sinusoidal configuration yielding a fluff or batting-like body of considerable loft.

The fluff or batting of the invention may be utilized alone or may be provided with a suitable barrier layer of flexible sheet material or metal depending upon its desired use.

The stabilized fibers when permanently set in accordance with the present invention into the desired structural configuration, e.g., by knitting, and thereafter heating at a temperature of greater than about 550°C, retain their resilient and reversible deflection characteristics. It is to be understood that higher temperatures may be employed of up to about 1500°C. However, the most flexible and smallest loss of fiber breakage, when carded to produce the wool-like fluff, is found in those fibers and/or filaments which are heat treated to a temperature of from 525 to 750°C.

The carbonaceous material which is utilized in the thermal insulating and sound absorbing structures of the invention may be classified into three groups depending upon the particular use and the environment that the structures in which they are incorporated are placed.

In a first group, the nonflammable, nonlinear carbonaceous fibers are electrically nonconductive and the fibrous batting may be used in connection with, for example, clothing or sleeping blankets because of its excellent washability and low moisture absorbency. The fibers may be blended with other synthetic or natural fibers including cotton, wool, polyester, polyolefin, nylon, rayon and the like.

In order to test the moisture absorbent characteristics of the wool-like fluff of the invention, several tests were conducted with batting having a density of from 2.4 to 8 kg/m$^3$. Samples of the carbonaceous fiber batting were submerged in water and removed and wrung out by hand until no dripping of water was observed. The moisture retention of the samples, based on the total weight of the batting and the moisture remaining in the batting was from 10 weight percent to less than 20 weight percent. With such a small amount of moisture remaining in the batting, the batting still retains its thermal insulation characteristics.

In a second group, the nonflammable, nonlinear carbonaceous fibers are classified as being partially electrically conductive (i.e., having low conductivity) and have a carbon content of less than 85 percent. When the precursor stabilized fiber is an acrylic fiber, i.e., a polyacrylonitrile based fiber, the percentage nitrogen content is from 10 to 35 percent, preferably, from 20 to 25 percent. These particular fibers in the form of a wool-like fluff, are excellent for use as insulation for vehicles, in particular commercial or military aircraft where light weight, nonflammable and thermal insulating characteristics in sound absorbing structures are highly desirable. Such structures are also highly desirable as insulation in areas where public safety is a major concern, such as in public buildings, for example hospitals, hotels, office buildings and the like. The structures formed from the wool-like fluff are also extremely light in weight, are nonflammable, have low moisture absorbency, good abrasive strength, good appearance and handle.

In a third group are fibers having a carbon content of at least 85 percent. These fibers, as a result of their high carbon content, have superior thermal insulating and sound absorbing characteristics. The coil-like structure in the form of a wool-like fluff (when carded) provides an insulation which has good compressibility and resiliency while maintaining improved thermal insulating efficiency. The structure prepared with the these fibers has particular utility as high temperature insulation of, for example, furnaces and in various other areas of high heat and noise.

The carbonaceous precursor materials which are advantageously utilized in preparing the stabilized fibers and wool-like fluff of the invention are selected from acrylonitrile homopolymers, acrylonitrile copolymers (in particular PANOX® or GRAFIL-01®) and acrylonitrile terpolymers. The copolymers preferably contain at least about 85 mole percent of acrylonitrile units and up to 15 mole percent of one or more monovinyl units copolymerized with styrene, methylacrylate, methyl methacrylate, vinyl chloride, vinylidene chloride, vinyl pyridine, and the like. Also, the acrylic filaments may comprise terpolymers, preferably, wherein the acrylonitrile units are at least about 85 mole percent.

It is to be further understood that carbonaceous precursor materials may have imparted to them an electrically conductive property on the order of that of metallic conductors by heating the fibers, wool-like fluff or the batting-like shaped material to a temperature above 1000°C in a nonoxidizing atmosphere. The electroconductive property may be obtained from selected additional starting materials such as pitch (petroleum or coal tar), polyacetylene, polyphenylene, polyvinylidene chloride resin (SARAN, a Trademark of The Dow Chemical Company) and the like.

4

Preferred precursor materials are prepared by melt spinning or wet spinning the precursor materials in a known manner to yield a monofilament fiber, filament yarn, or tow. A woven or knitted cloth can be produced from the fiber, yarn, or tow by any of a number of commercially available techniques. The stabilized material is then heated to a temperature above 525°C, preferably to a temperature above 550°C in an inert atmosphere. The carbonized knitted cloth is thereafter deknitted and carded to produce the wool-like fluff which can be laid up in batting-like form.

The wool-like fluff of the invention may be treated with an organic or inorganic binder, needle punched, bagged or adhered to a flexible or rigid support using any of the conventional materials and techniques depending upon the use and environment of the structure. The fluff may be placed on one side of a structure such as a furnace or between structural parts either in the form of a mat or batting.

It is understood that all percentages as herein utilized are based on weight percent.

Exemplary of the present invention are set forth in the following examples:

Example 1

A stabilized polyacrylonitrile PANOX (R.K. Textiles) continuous 3K or 6K (3000 or 6000 fiber) tow, hereafter referred to as OPF, having nominal single fiber diameters of 12 micrometer, was knit on a flat bed knitting machine into a cloth having from 3 to 4 loops/cm. Portions of this cloth were heat set at one of the temperatures set forth in Table I over a 6 hour period. When the cloth was deknitted, it produced a tow which had an elongation or reversible deflection ratio of greater than 2:1. The deknitted tow was cut into various lengths of from 5 to 25 cm, and fed into and opened by a Platts Shirley Analyzer. The fibers of the cut tow were separated by a carding treatment into a wool-like fluff, that is, the resulting product resembled an entangled wool-like mass or fluff in which the fibers had a high interstitial spacing and a high degree of interlocking as a result of the coiled and spring-like configuration of the fibers. The fiber lengths of each such treatment were measured and the results of these measurements set forth in Table I, following.

## TABLE I

| Run # | Fiber Staple Length (cm) | Heat Treatment in °C | Stitches/ cm | Tow Size |
|---|---|---|---|---|
| 1 | 15 | 550 | 4 | 3K |
| 2 | 5 | 550 | 4 | 3K |
| 3 | 10 | 650 | 3 | 6K |
| 4 | 10 | 950 | 3 | 6K |
| 5 | 20 | 750 | 3 | 6K |
| 6 | 25 | 950 | 4 | 6K |

| Run # | Range of Fiber Lengths (cm) | Length of Majority of Fibers (cm) |
|---|---|---|
| 1 | 3.8 - 15 | 13 - 15 |
| 2 | 2.5 - 5 | 2.5 - 5 |
| 3 | 5.0 - 10 | 7.5 - 10 |
| 4 | 3.8 - 9.5 | 7.5 - 9.5 |
| 5 | 7.5 - 19 | 15.0 - 19 |
| 6 | 7.5 - 23 | 19.0 - 23 |

The aspect ratio of each of the fibers was greater than 10:1 and each possessed a LOI value of greater than 40.

Example 2

A series of runs ware made to determine the effect various heat treatment temperatures had on the fibers. A significant property was the specific resistivity of the fibers. To determine such property, numerous samples of an oxidation stabilized polyacrylonitrile yarn (PANOX manufactured by R.K. Textiles of Heaton-Norris, Stockport, England), having a density from 1.35 to 1.39 $g/cm^3$ and having either 3K or 6K filaments per tow, respectively was knitted into a plain jersey flat stock having from 3 to 4 stitches/cm, respectively. The cloth was placed under an oxygen-free nitrogen pad in an incremental quartz-tube furnace. The temperature of the furnace was gradually increased from room temperature to about 750°C over a three-hour period with the higher temperatures being achieved by 50°C increments every 10 to 15 minutes. The material was held at the desired temperature for about one hour, the furnace opened and allowed to cool while purging with argon.

The specific resistivity of the fibers was calculated from measurements made on each sample using a measured average of six measurements, one made from fibers removed at each corner of the sample and one made from fibers removed from each edge, approximately at the middle of the sample. The results are set forth in Table II, following.

6

TABLE II

| Final Temp. in °C | Percent Weight Loss | Log Specific Resistivity Measured in ohm-cm |
|---|---|---|
| 500 | - | 4.849 |
| 550 | 33 | - |
| 600 | - | 2.010 |
| 650 | 34 | - |
| 750 | 37 | -1.21 |
| 850 | 38 | -2.02 |
| 900 | 42 | -2.54 |
| 950 | 45 | -2.84 |
| 1000 | 48 | -3.026 |
| 1800 | 51 | -3.295 |

All of the above fibers had an LOI greater than 40 and an aspect ratio greater than 10:1.

The analysis of the heat treated fibers was as shown in Table III, following.

TABLE III

| Temperature (°C) | %C | %N | %H |
|---|---|---|---|
| ambient (OPF) | 58.1 | 19.6 | 3.8 |
| 450 | 66.8 | 19.4 | 2.2 |
| 550 | 69.9 | 18.9 | 1.9 |
| 650 | 69.7 | 18.1 | 1.6 |
| 750 | 73.0 | 17.8 | 1.1 |

Example 3

A fabric was knitted from a 3K or 6K PANOX OPF (R.K. Textiles) continuous, stabilized, filament tow on a Singer® flat bed knitting machine and heat treated at temperatures until thermoset. The fabric was then deknitted and the spring-like, coil shaped tow fed directly into a carding machine. The resulting wool-like fluff was collected onto a rotating drum and had sufficient integrity to enable it to be easily handled.

The fibers treated at a temperature of 550°C and made into a wool-like fluff are particularly suitable as insulation for clothing such as parkas, sleeping blankets, and the like, because of its excellent hand. The fluff can also be used to insulate structures for sound and against extreme temperature.

Fibers treated at a slightly higher temperature of from 550°C to 650°C and made into fluff are particularly suitable for use as insulation in, for example, vehicles, particularly airplanes.

A wool-like fluff treated at a temperature of 950°C was highly electrically conductive and had a resistance of less than 75 ohms at any probe length taken at widely separated distances (up to 60 cm) in the wool-like fluff. The fibers were suitable for use as insulation around, for example, engines or turbines to absorb noise. The results of the examples are summarized in Table IV, following.

### TABLE IV

| Run # | Fiber Staple Length (cm) | Heat Treatment °C | Stitches/cm |
|---|---|---|---|
| 1 | 7.5 | 550 | 4 |
| 2 | 10 | 650 | 3 |
| 3 | 15 | 650 | 3 |
| 4 | 20 | 950 | 3 |
| 5 | 25 | 950 | 3 |

| Run # | Tow Size | Range of Fibers Lengths (cm) |
|---|---|---|
| 1 | 3K | 2.5 - 7.5 |
| 2 | 6K | 2.5 - 10 |
| 3 | 6K | 2.5 - 13.3 |
| 4 | 6k | 2 - 15.0 |
| 5 | 6K | 2 - 12.5 |

The experiments also illustrate that the higher temperature heating resulted in a shrinkage of the fibers.

Example 4

A 3K OPF PANOX stabilized tow was knit on a Singer® flat bed knitting machine at a rate of 4 stitches/cm and was then heat treated at a temperature of 950°C. The cloth was deknitted and the tow (which had a coil elongation or reversible deflection ratio of greater than 2:1) was cut into 7.5 cm lengths. The cut tow was then carded on a Platt Miniature® carding machine to produce a wool-like fluff having fibers ranging from 2.5 to 6.5 cm in length. The wool-like fluff had a high electrical conductivity (a resistance of less than $4 \times 10^3$ ohms/cm) over any length of up to 60 cm tested.

Instead of PANOX, there may be employed stabilized pitch based fibers or a copolymer or terpolymer of polyacrylonitrile.

Example 5

In a similar manner to Example 4, a portion from the same knit sock was heat treated at a temperature of 1550°C. The cloth itself and the deknitted tow had a very high electrical conductivity. On carding 15 cm lengths of the cut tow, a wool-like fluff was obtained which had fiber lengths of from 2.5 to 7.5 cm with average lengths of 5 cm. Thus, carding of a deknitted, continuous filament tow, fabric which has been subjected to a temperature of above 1000°C is still capable of producing a wool-like fluff product.

Example 6

A 3K OPF tow was knitted into a sock, the sock treated at a temperature of 525°C until it was thermally set and thereafter deknitted and cut into nominal lengths of from 18 to 19 cm. The cut tows were opened on a Shirley® opener and then further processed on a Rando Webber® machine (an air laying system for producing nonwoven batting). The feed plate combing rolls were spaced apart at a distance of 0.3 mm and dispersed into the chamber using a 1200 rpm setting on the fan. A small amount of low melting fibers of ethylene acrylic acid copolymer (manufactured from PRIMACOR® 440 resin produced by The Dow Chemical Company), was blended with the cut OPF tow fibers as it was fed into the Shirley® opener. The resulting batting was passed through a hot air oven and held at a temperature of 260°C at a rate of 2 m/min resulting in an oven time of about 1 minute. This was sufficient to melt the ethylene acrylic acid copolymer to achieve a light bonding of the carbonaceous fibers in the batting.

Example 7

In a similar manner described in Example 6, the cut fibers were treated in a Shirley® opener and then a Rando Webber® air laying system, but without the low melting polyethylene acrylic acid copolymer added. The resulting batting was processed on a Hunter® Fiber Locker to obtain a mechanical bonding by the needle punching process. The resulting structure was suitable as a sound absorbing mat for use under a synthetic fiber carpet.

Example 8

The noise level of a single engine plane, Mooney Model 20C (Manufactured by Mooney Aviation, Kerville, Texas), was measured using a sound source abutting the outside skin panel which forms the outside wall of the luggage compartment of the plane. A sound measuring meter was placed inside the plane at a distance of 15 cm from the inside skin of the plane. Measurements taken using several frequencies are set forth in Table V, following.

TABLE V

| Frequency Hz | Inside Decibels* | Inside Decibels** | Inside Decibels*** |
|---|---|---|---|
| 250 | 77 | 59 | 53 |
| 500 | 79 | 63 | 49 |
| 1000 | 72 | 69 | 57 |
| 2000 | 86 | 69 | 51 |

*No insulation
**Standard lead/vinyl/fiberglass
***Present invention

The plane had an original insulation package consisting of 16 kg/m³ of standard fiberglass having a thickness of 2.5 cm backed by aluminum foil positioned behind the panels of the interior of the plane. The package weighed approximately 10 kg and had a thermal resistance or R value of about 3 1/2 to 4. A package of the invention is described in Table VI, following. The total insulating area was approximately 7.5 m². The size of the top and luggage area consisted of 5.3 m² which was insulated with about 5 kg of the package of the invention. The package was made up by cutting some of the batting of the invention, containing 3.2 to 3.8 cm, 500°C fibers of Example 3 with 23 percent polyester binder fiber which had been manufactured into a nonwoven batting with the use of a Rando Webber. Sections of the batting were laminated by gluing to sheets of a heavy grade aluminum foil. Each section was bagged in a Mylar® reinforced film bag with the side facing the interior of the plane containing some fiberglass screening to allow for breathing of the insulation. The floor area of the plane was 1.2 m². This was insulated with 850 gm of the bagged aluminum fiber structure. The material used for the floor area was a densified latex bonded carbonaceous fiber batting which was laminated to aluminum foil and placed in a similar Mylar bag. The total weight of the insulation was 5.5 kg. Of this, there was approximately 2 kg of the actual wool-like fluff of the invention, the rest of the weight was made of the aluminum foil and Mylar packing. The thermal resistivity or R value of the polyester bonded wool-like fluff of the invention was about 7.3 which is about double the value of the original insulation material used.

A typical, current state-of-the-art insulation package consisting of a sound board, fiberglass and leaded vinyl would weigh 25 kg for the interior area and an additional 2 kg for the floor area, for a total package weight of 27 kg. The weight savings of the wool-like fluff batting (the package of the invention that was used) versus the standard package, which would have similar R values of from 6 to 7, shows that the carbonaceous fluff weighed only 22 percent as much as the original package.

Sound measurements were taken on this aircraft at a cruise altitude of 1500 m at standard engine settings with the original insulation and after the new insulation package was installed. The results are

9

shown in Table VII, following. In the speech interference level of from 500 to 2000 Hz, the sound value of the aircraft with the original insulation was 93.3 dB. After insulation with the new package, the speech interference level value dropped to 83 dB (for every 3 dB drop the sound level is cut in one half). Accordingly, the insulation of the invention reduced the sound level by more than 8 fold at the ear level of the pilot. These measurements were made with the old interior of the plane fitted loosely back in for the purpose of test flight. A new fitted interior was placed in the aircraft and the sound measurements once again measured at the 1500 m level. The speech interference level at the ear level of the pilot dropped to 76.3 dB and at and elevation of 2850 m dropped even further to a value of 78.9 dB.

TABLE VI

| | Original Insulation FG* | Insulation Structure of Invention | Standard Insulation Structure |
|---|---|---|---|
| Weight (kg) | 10 | 5.5 | 27 |
| Thermal (R) | 4 | 8 | 8 |
| Sound (SILA) (dB) | 93.5 | 83 | 86-87 |
| SILA = Speech Interference Level 500 + 1K + 2K/3 | | | |

*Fiberglass

The study demonstrates that the sound attenuation and dampening characteristics with the carbonaceous fiber-aluminum foil-carbonaceous fiber laminated package of the invention showed a substantial improvement over conventional fiberglass/lead vinyl package of the prior art where the lead vinyl is used to dampen sound especially at lower frequencies of less than 1000Hz.

Example 9

Similar to Example 8, a Falcon 50 S/N 51 airplane having an original insulation of microwhite fiberglass (FG) having a thickness of about 5 cm and a density of 9.6 kg/m$^3$ was replaced with a batting of the invention. The results are shown in Table VII, following.

TABLE VII

| | Orig. FG* | Invention | Std. FG[1) ] |
|---|---|---|---|
| Weight (kg) | 67 | 58 | 110 |
| Batting Thickness (cm) | 5 | 10 | 10 |
| Thermal (R) | 7 | 14 | 14 |
| Sound (SILA) (dB) | 60.5 | 57 | 61 |
| SILA = Speech Interference Level 1K + 2K + 4K/3 | | | |

*Microwhite Fiberglass

Example 10 (Comparative example with rayon)

A. Carbonaceous Filaments From a Rayon Precursor

A 300 denier (300g/9000m) and a 1650 denier (1650g/9000m) rayon continuous tow yarn was knitted into approximately two socks having a diameter of about 2.5 cm on a single end jersey-style circular knitting machine, and were cut into four short sections. Three such sections from the sock knit from the 300 denier (300g/9000m) yarn tow were introduced, one at a time, into a tube furnace. In each instance the furnace was closed and purged with nitrogen for fifteen (15) minutes. Thereafter the furnace temperature was slowly raised for the first sock section to 370°C over a one and one half (1 1/2) hour period, for the second sock section to 550°C over a one and three quarter (1 3/4) hour period, and for the third sock section to 1050°C over a one and one quarter (1 1/4) hour period.

Each section taken from the furnace was black in color. The first section which had been heated to a temperature of 370°C, was very flexible and substantially electrically nonconductive. The yarn tow was capable of careful hand deknitting. The deknitted tow was of a sinusoidal configuration and was capable of elongation to a straight (linear) length with little breakage of the individual fibers. The tow lost its sinusoidal configuration when heat was applied by blowing hot air from a heat gun (a hair dryer) against the fiber tow, thus indicating that the "set" (sinusoidal or coil-like configuration of the tow) was only temporary. Only minimal weight loss was observed as a result of the heat treatment procedure.

The second section which had been heated to a temperature of 550°C was moderately flexible, was substantially electrically conductive and had an electrical resistivity of $7 \times 10^9$ ohms per square. The tow was capable of careful hand deknitting but broke into short lengths of from 2.5 to 5 cm. The pieces of deknitted tow had a sinusoidal configuration but were not capable of reversible full elongation (reversible deflection) without breaking, that is the individual fibers of the deknitted tow broke into short pieces even when the most gentle attempts were made to elongate the sinusoidal configuration of the tow to anything approaching a straight (liner) configuration.

While the tow lengths of from 2.5 to 5 cm did not appear to lose their sinusoidal configuration when heat was applied, the fibers broke due to the force of the air from the heat gun. The yarn strands comprised of the bundle of short fibers were brittle, and it was impossible, even when the most gentle conditions of handling were used, to separate the individual fibers of lengths greater than about 1 cm.

The third section, which had been heated to a temperature of 1050°C, was even less flexible than the previous section. It had lost over 75 percent of its original dry weight, resulting in a marked decrease of fiber diameter, and was substantially electrically conductive having an electrical resistivity of 70 ohms per square. It was not possible to draw a tow from the knitted fabric in its knitted state after heating, even by careful hand deknitting. The fibers broke into short lengths as the tow was drawn from the fabric. On attempting to deknit the fabric, bundles of fibers of less than 1.25 cm in length having a sinusoidal configuration were not capable of elongation since the individual fibers broke into even smaller pieces.

B. Carbonaceous Filaments According to the Invention

The procedure of Part A was followed except that instead of rayon the sock was prepared from an oxidation stabilized polyacrylonitrile based (PANOX) fiber tow (3000 count filaments).

The tow was heated to a temperature of 1000°C, and had a weight loss of 46.5 percent. A 5 cm length of the deknitted tow had a resistance of 48 ohms.

A 2.5 x 5 cm section of the sock after heating to a temperature of 1500°C had, before deknitting, a resistance of 1.9 ohms and a stretched section of a deknitted tow 2.5 cm in length had a resistance of 2.9 ohms.

C.

Following the procedure of Part B, similar oxidation stabilized polyacrylonitrile based (PANOX, 6000 count filaments) tow knit fabrics were heated to temperatures of 372°C and 564°C, respectively. The portion which had been heat treated to 564°C lost 31 percent of its weight and had a resistance, with respect to the cloth, of $1 \times 10^6$ ohm per square. A tow drawn from the fabric had a resistance of 400 K ohms per cm.

The material which had been heat treated to 372°C lost about 31 percent of its original weight and had an electrical resistance of greater than about $10 \times 10^{12}$ ohm per square.

The experiments show that it is evident that the nature of the precursor material, the oxidation stabilized polyacrylonitrile, provides properties which the rayon precursor does not provide when subjected to the same treatment.

Example 11

Nonflammability Test

The nonflammability of the fibers of the invention has been determined following the test procedure set forth in 14 FAR 25.853(b). The test was performed as follows:

A minimum of three 2.5 x 15 x 15 cm specimens were contributed by maintaining the specimens in a conditioning room maintained at a temperature of 70 ±5 °F and 50 ± 5 percent relative humidity for 24 hours preceding the test.

Each specimen was supported vertically and exposed to a Bunsen or Turill burner with a nominal I.D. tube adjusted to give a flame of about 3.8 cm in height. A calibrated thermocouple pyrometer positioned in the center of the flame measured the temperature of the flame. The lower edge of the specimen was about 1.9 cm above the top edge of the burner. The flame was applied to the center line of the lower edge of the specimens for 12 seconds and then removed.

Pursuant to the test, the material was self-extinguishing. The average burn length did not exceed 20 cm. The average after flame did not exceed 15 seconds and no drippings of the specimens were observed. Surprisingly, the fibers of the invention all had an LOI of greater than 40.

**Claims**

1. The use of a batting of resilient, shape reforming, elongatable, nonlinear, nonflammable carbonaceous fibers, said fibers having a reversible deflection ratio of greater than 1.2:1, an aspect ratio greater than 10:1 and a limited oxygen index value greater than 40, and containing at least 65% carbon, as a sound-absorbing material in a sound absorbing structure.

2. The use of a batting according to claim 1, wherein said fibers are substantially electrically nonconductive.

3. The use of a batting according to claim 2, wherein said fibers are derived from stabilized acrylic fibers having a diameter of from 7 to 20 $\mu$m, wherein a 6K tow of said fibers has an electrical resistance of greater than $4 \times 10^6$ ohms/cm.

4. The use of a batting according to claim 1, wherein said fibers are derived from stabilized polyacrylonitrile based polymers having a nitrogen content of from 10 to 35 percent.

5. The use of a batting according to any one of the preceding claims, wherein said batting comprises a wool-like fluff in which the carbonaceous fibers have a sinusoidal or coil-like shape, and wherein said batting is blended with other synthetic or natural fibers or a synthetic resinous material binder.

6. The use of a batting according to claim 1, wherein said fibers are electrically conductive.

7. The use of a batting according to claim 6, wherein said fibers are derived from stabilized acrylic fibers having a carbon content of greater than 85 percent and a nitrogen content of less than 10 percent, and wherein a 6K tow of said carbonaceous fibers as an electrical resistance of less than $4 \times 10^3$ ohms/cm.

8. The use of a batting according to claim 7, wherein said structure has a bulk density of less than 8 kg/m$^3$.

9. The use of a batting according to claim 1, wherein said fibers are derived from stabilized acrylic fibers having a diameter of from 7 to 20 $\mu$m, a carbon content of less than 85 percent and a nitrogen content of from 10 to 35 percent, and wherein a 6K tow of said fibers has an electrical resistance of from $4 \times 10^6$ to $4 \times 10^3$ ohms/cm.

10. The use of a batting according to claim 9, wherein said fibers are derived from stabilized polyacrylonitrile based fibers and have a nitrogen content of from 20 to 25 percent.

11. The use of a batting according to any one of the preceding claims, wherein said fibers contain a curable polymeric binder.

12. The use of a batting according to any one of the preceding claims, wherein said structure has a bulk density of from 2.4 to 32 kg/m$^3$.

13. The use of a batting according to any one of the preceding claims, wherein said carbonaceous fibers are made from a carbonaceous precursor material selected from acrylonitrile homopolymers, acrylonitrile copolymers and acrylonitrile terpolymers, wherein the acrylonitrile polymers contain at least about 85 mole percent of acrylonitrile units and up to 15 mole percent of one or more monovinyl units.

**Patentansprüche**

1. Verwendung einer Watte aus elastischen, Form wiederbildenden, dehnbaren, nichtlinearen, nichtentflammbaren kohlenstoffhaltigen Fasern, wobei die Fasern ein reversibles Auslenkungsverhältnis von größer als 1,2:1, ein Längenverhältnis größer als 10:1 und einen begrenzten Sauerstoffindexwert von größer als 40 haben, und mindestens 65% Kohlenstoff enthalten, als ein schallabsorbierendes Material in einer schallabsorbierenden Struktur.

2. Verwendung einer Watte nach Anspruch 1, worin die Fasern im wesentlichen elektrisch nichtleitend sind.

3. Verwendung einer Watte nach Anspruch 2, worin die Fasern abgeleitet sind aus stabilisierten Acrylfasern mit einem Durchmesser von 7 bis 20 $\mu$m, worin ein 6K Towgarn dieser Fasern einen elektrischen Widerstand von größer als $4 \times 10^6$ Ohm/cm hat.

4. Verwendung einer Watte nach Anspruch 1, worin die Fasern von stabilisierten Polymeren auf Polyacrylnitrilbasis mit einem Stickstoffgehalt von 10 bis 35 Prozent abgeleitet sind.

5. Verwendung einer Watte nach einem der vorhergehenden Ansprüche, worin die Watte einen wolleähnlichen Flaum umfaßt in welchem die kohlenstoffhaltigen Fasern eine sinusförmige oder wendelähnliche Form haben, und worin die Watte mit anderen synthetischen oder natürlichen Fasern oder einen synthetischen Binder aus harzigem Material gemischt sind.

6. Verwendung einer Watte nach Anspruch 1, worin die Fasern elektrisch leitend sind.

7. Verwendung einer Watte nach Anspruch 6, worin die Fasern aus stabilisierten Acrylfasern abgeleitet sind mit einem Kohlenstoffgehalt von größer als 85 Prozent und einem Stickstoffgehalt von weniger als 10 Prozent, und worin ein 6K Towgarn dieser kohlenstoffhaltigen Fasern einen elektrischen Widerstand von weniger als $4 \times 10^3$ Ohm/cm hat.

8. Verwendung einer Watte nach Anspruch 7, worin die Struktur ein Schüttgewicht von weniger als 8 kg/m$^3$ hat.

9. Verwendung einer Watte nach Anspruch 1, worin die Fasern aus stabilisierten Acrylfasern abgeleitet sind mit einem Durchmesser von 7 bis 20 $\mu$m, einem Kohlenstoffgehalt von weniger als 85 Prozent und einem Stickstoffgehalt von 10 bis 35 Prozent, und worin ein 6K Towgarn dieser Fasern einen elektrischen Widerstand von $4 \times 10^6$ bis $4 \times 10^3$ Ohm/cm hat.

10. Verwendung einer Watte nach Anspruch 9, worin die Fasern aus stabilisierten Fasern auf Polyacrylnitrilbasis abgeleitet sind und einen Stickstoffgehalt von 20 bis 25 Prozent haben.

11. Verwendung einer Watte nach einem der vorhergehenden Ansprüche, worin die Fasern ein härtbaren Polymerbinder enthalten.

12. Verwendung einer Watte nach einem der vorhergehenden Ansprüche, worin die Struktur ein Schüttgewicht von 2,4 bis 32 kg/m$^3$ hat.

13. Verwendung einer Watte nach einem der vorhergehenden Ansprüche, worin die kohlenstoffhaltigen Fasern aus einem kohlenstoffhaltigen Vorstufenmaterial hergestellt wurden, ausgewählt aus Acrylnitril-Homopolymeren, Acrylnitril-Copolymeren und Acrylnitril-Terpolymeren, worin die Acrylnitril-Polymere mindestens etwa 85 Molprozent Acrylnitril-Einheiten und bis zu 15 Molprozent einer oder mehrerer Monovinyleinheiten enthalten.

**Revendications**

1. Utilisation d'un mat de fibres carbonées ininflammables, non linéaires, allongeables, reprenant leur forme, et élastiques, lesdites fibres ayant un rapport de déflexion réversible supérieur à 1,2:1, un rapport d'aspect supérieur à 10:1 et une valeur d'indice d'oxygène limitée supérieure à 40, et contenant au moins 65% de carbone, en tant que matière absorbant le son dans une structure absorbant le son.

2. Utilisation d'un mat selon la revendication 1, dans lequel lesdites fibres sont sensiblement non conductrices de l'électricité.

3. Utilisation d'un mat selon la revendication 2, dans lequel lesdites fibres sont dérivées de fibres acryliques stabilisées ayant un diamètre de 7 à 20 $\mu$m, dans lesquelles un brin de 6K desdites fibres possède une résistance électrique supérieure à 4 x 10$^6$ ohms/cm.

4. Utilisation d'un mat selon la revendication 1, dans lequel lesdites fibres sont dérivées de polymères à base de polyacrylonitrile stabilisé ayant une teneur en azote de 10 à 35 pourcent.

5. Utilisation d'un mat selon l'une quelconque des revendications précédentes, dans lequel ledit mat comprend un duvet ressemblant à de la laine, dans lequel les fibres carbonées ont une forme sinusoïdale ou ressemblant à une bobine, et dans lequel ledit mat est mélangé avec d'autres libres naturelles ou synthétiques ou avec un liant de matière résineuse synthétique.

6. Utilisation d'un mat selon la revendication 1, dans lequel lesdites fibres sont conductrices de l'électricité.

7. Utilisation d'un mat selon la revendication 6, dans lequel lesdites fibres sont dérivées de fibres acryliques stabilisées ayant une teneur en carbone supérieure à 85 pourcent et une teneur en azote inférieure à 10 pourcent, et dans lequel un brin de 6K desdites fibres carbonées présente une résistance inférieure à 4 x 10$^3$ ohms/cm.

8. Utilisation d'un mat selon la revendication 7, dans lequel, ladite structure a une densité apparente inférieure à 8 kg/m$^3$.

9. Utilisation d'un mat selon la revendication 1, dans lequel lesdites fibres sont dérivées des fibres acryliques stabilisées ayant un diamètre de 7 à 20 $\mu$m, une teneur en carbone inférieure à 85 pourcent et une teneur en azote de 10 à 35 pourcent, et dans lequel un brin de 6K desdites fibres présente une résistance électrique de 4 x 10$^6$ à 4 x 10$^3$ ohms/cm.

10. Utilisation d'un mat selon la revendication 9, dans lequel lesdites fibres sont dérivées de fibres à base de polyacrylonitrile stabilisé et ont une teneur en azote de 20 à 25 pourcent.

11. Utilisation d'un mat selon l'une quelconque des revendications précédentes, dans lequel lesdites fibres contiennent un liant polymère durcissable.

12. Utilisation d'un mat selon l'une quelconque des revendications précédentes, dans lequel ladite structure a une densité apparente de 2,1 à 32 kg/cm$^3$.

13. Utilisation d'un mat selon l'une quelconque des revendications précédentes, dans lequel lesdites fibres carbonées sont faites à partir d'une matière précurseur carbonée choisie parmi les homopolymères acrylonitrile, les copolymères acrylonitrile et les terpolymères acrylonitrile, dans lesquels les polymères acrylonitrile contiennent au moins environ 85 pourcent en moles de motifs acrylonitrile et jusqu'à 15 pourcent en moles d'un ou plusieurs motifs monovinyliques.